# EUROPEAN PATENT APPLICATION

(11) **EP 0 869 639 A2**
(43) Date of publication of application: **07.10.1998**
(21) Application number: 98400726.0
(22) Date of filing: 27.03.1998
(51) Int. Cl.: H04L 12/24, H04L 29/06, H04L 12/56

(54) **Message tracking**

(30) Priority: 28.03.1997 US 829456
(71) Applicant: Sun Microsystems Inc., Palo Alto, California 94303-4900 (US)
(72) Inventor: Grant, Michael Allen, 38000 Grenoble (FR)
(74) Representative: Harris, Ian Richard

(57) **Abstract**

In order to provide a user of a computer messaging system with information about a message sent over an information network, for example the Internet, a message track data structure including data from the track of a message is built. This is then used to generate a graphical representation of the message track for display to the user. In building the message track data structure, entries are created for nodes in the message track, the entries including data defining the message status at the nodes. Graphical representations of nodes and of connecting elements for connecting nodes, and iconic representations of message status at the nodes can be accessed in a graphical database or generated on the fly for creating the graphical representation of the message track. Textual information can be added to the graphical representations of the nodes. The message tracking can be performed at the same time as message transmission or alternatively at a later time in response to a message tracking request.

## Description

This invention relates to message tracking in information processing networks.

The invention finds particular application to Internet-based message tracking. At the present time, only limited message tracking facilities are provided for Internet-based messages. Indeed, full message-tracking is not provided. In practice, the message-tracking is limited to error messages which will be received when a message is undeliverable, typically because the intended recipient's address cannot be located due to an error in that address and/or due to a failure at the intended recipient's host. In cases where it has not been possible to deliver a message, the initial sender of the message will receive a response indicating, for example, "user unknown".

In particular, on the Internet, there exist 2 types of e-mail messages, namely messages and notifications. A message is what the user sends to one or more users on the Internet. A notification is a message detailing what happened if the message failed or when it arrived at its destination, or where it is waiting to be delivered. For the Internet, there is a set of so-called RFCs (Request for Comments) detailing how to use Delivery Status Notifications (DSNs) for returning the status of a message back to the originator of a message. RFCs are essentially the standards which the Internet is built on. The format and when to send a DSN is detailed in these RFCs. In particular the RFCs specify how and when to send DSNs back when a problem in the track of a message is reached and when the message arrives at it's final destination.

It would be desirable to provide better and more complete message tracking facilities for messages sent via the Internet to handle situations other than those laid down in the RFCs. However, due to complex issues, including for example the complicated routing possibilities associated with, for example, a multiple-recipient message, an unwieldy volume of data might need to be presented to the user.

Accordingly, there is a need for a message tracking facility which would be useable with complex information processing networks such as the Internet.

In accordance with a first aspect of the invention, there is provided a method of tracking a message sent over an information network, the method comprising steps of:
a) building a message track data structure including status data from a plurality of nodes in a track of a message;
b) generating a graphical representation of the message track from the message track status data, the graphical representation including a plurality of graphical elements representative of the status data at the nodes, wherein the graphical elements are mutually arranged to represent the message track.

The generation of a message track data structure and the use of graphical representation of the data structure, preferably a tree-like representation, provides a method for automatically managing and displaying the message track information to a user in a manner which can readily be understood and manipulated by the user.

The graphical representation can be displayed on the display screen of a computer system, printed, stored for later display, or transmitted to a remote location for display as required.

Step (b) can comprise responding to the status data to access a palette of iconic representations of message status at the nodes for generating the graphical elements. Alternatively, step (b) can comprise responding to the status data to generate graphical elements on the fly for representing the message status at the nodes.

Preferably, step (b) can comprise generating a hierarchy of graphical elements, with each graphical element graphically representing message status at a node. The graphical elements of the hierarchy can be linked as a rooted tree, or as a graph. Optionally, step (b) can include adding text to the graphical elements. The text can identify one or more of the following: the identity of a node in the message track; the identity of a message; the disposition of a message at a node.

The method can further comprise:
c) in response to user selection of part of the graphical representation, expanding the selected part by generating further graphical elements detailing one or more lower level nodes in the message track.

Also, the method can further comprise:
c) in response to user selection of part of the graphical representation, adding text describing message status at a part of the graphical representation.

Also, the method can further comprise:
c) in response to user selection of at least a part of the graphical representation, replacing the part by a text describing message status at the selected part. Also, the method can further comprise:
c) in response to user selection of part of the graphical representation including a plurality of nodes, compressing the selected part by generating a graphical element representative of a higher level node including the plurality of nodes.

Preferably, the method further comprises displaying the graphical representation on a display device.

In a preferred embodiment the information network is the Internet.

In accordance with another aspect of the invention, there is provided a message tracking system comprising a message tracking tool configured to be operable to access a message track data structure including status data from a plurality of nodes in a track of a message for generating a graphical representation of the message track from the message track status data, the graphical representation including a plurality of graphical elements representative of the status data at the nodes, wherein the graphical elements are mutually arranged to represent the message track.

Preferably, there is also provided, either integral to or separate from the message tracking tool, a message tracking mechanism configured to be operable to build the message track data structure.

The message tracking mechanism can be configured to be operable, following transmission of a message, to respond to responses sent from nodes in the message track, and indicating the message status at the nodes, to create corresponding entries in the message track data structure. The message tracking mechanism is preferably configured to be operable to identify a message identifier corresponding to or derived from a message identifier for the transmitted message to identify the responses.

Alternatively, or in addition, the message tracking mechanism is configured to be operable, at a user selected time subsequent to the transmission of a message, to transmit a message tracking request and subsequently to respond to responses to the message tracking request sent from nodes in the message track and indicating the message status at the nodes, to create corresponding entries in the message track data structure. Preferably, the message tracking mechanism is configured to be operable to identify a message identifier corresponding to or derived from a message identifier for the transmitted request to identify the responses.

A palette of iconic representations of message status can be provided, the message tracking tool being configured to be responsive to the status data to access the palette of iconic representations of message status at the nodes for generating the graphical elements.

Alternatively, or in addition, the message tracking tool can be configured to be responsive to the status data to generate graphical elements on the fly to represent the message status at the nodes.

Preferably, the message tracking tool is configured to be responsive to the status data to generate a hierarchy of graphical elements, with each graphical element graphically representing message status at a node.

The message tracking tool is preferably configured to be operable to display the graphical representation on a display device.

In a preferred embodiment, the message tracking tool and/or the message tracking mechanism comprise computer software.

The invention also provides a message tracking program on a data storage medium, the program comprising a message tracking tool configured to be operable to access a message track data structure including status data from a plurality of nodes in a track of a message for generating a graphical representation of the message track from the message track status data, the graphical representation including a plurality of graphical elements representative of the status data at the nodes, wherein the graphical elements are mutually arranged to represent the message track.

The invention further provides a computer comprising a message tracking tool program operable to access a message track data structure including status data from a plurality of nodes in a track of a message for generating a graphical representation of the message track from the message track status data, the graphical representation including a plurality of graphical elements representative of the status data at the nodes, wherein the graphical elements are mutually arranged to represent the message track. Preferably the computer comprises a display for displaying the graphical representation. The computer can also comprise a message tracking mechanism program configured to be operable to build the message track data structure.

Exemplary embodiments of the invention are described hereinafter, by way of example only, with reference to the accompanying drawings, in which:
Figure 1 is a schematic block representation of a message tracking tool in accordance with an embodiment of the invention;
Figure 2 is a functional diagram giving an overview of a mode of operation of the message tracking tool;
Figure 3 is a detail of the diagram of Figure 2;
Figure 4 is a schematic block diagram for explaining one method of building a message track data structure;
Figure 5 is an alternative to Figure 4;
Figure 6 is a schematic representation of an example of a simple message track;
Figure 7 is a schematic representation of an example of a message track with a single branch;
Figure 8 is a schematic representation of an example of a message track data structure;
Figure 9 illustrates the message track represented by the message track data structure of Figure 8;
Figures 10 is a schematic representation of a possible graphical display of the results of tracking a message;
Figures 11 is a schematic representation of an expanded version of the graphical display of Figure 10;
Figure 12 represent examples of possible icons for use with an embodiment of the invention; and
Figure 13 is a schematic representation of a user workstation displaying various screens produced by a message tracking tool according to an embodiment of the invention.

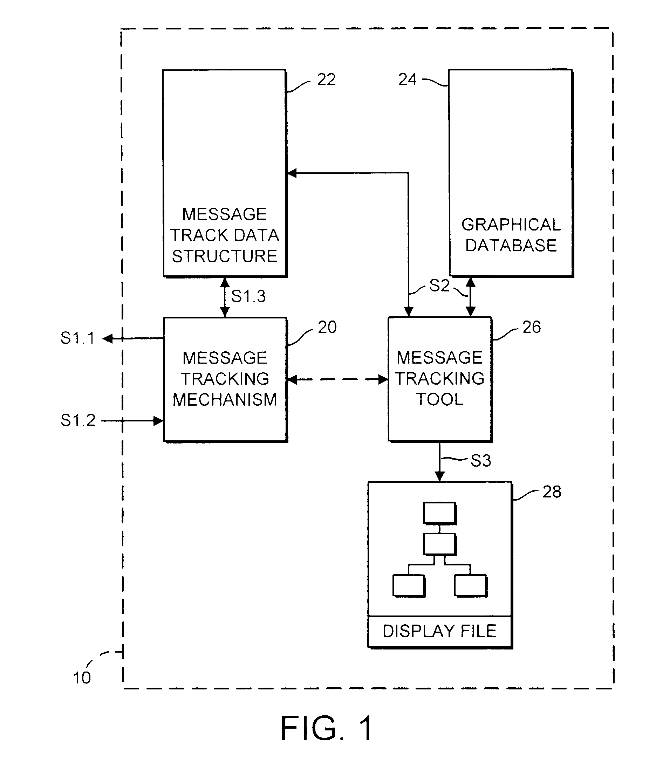

Figure 1 is a schematic block representation of a message tracking system in accordance with an embodiment of the invention. The message tracking system 10 can be implemented as a stand-alone software tool, or could be incorporated as part of a network manager or as part of an e-mail system. The message tracking system could be implemented as a unitary package, or in the form of separate components as will be described below. The message tracking system could be used in an intranet environment and/or an Internet environment. In other words, the message tracking system could be used in a private and/or public network environment. In the following description of a particular embodiment, the message tracking system is intended for use in the Internet environment, although it will provide message tracking of local intranet elements which form part of the overall message structure. The message tracking system is intended to be an integral part of a network manager for network management functions over the Internet using Intemet standard 'Simple Network Management Protocol' (SNMP) messaging and Management Information Base (MIB) technology. SNMP is a standard protocol (RFC 1157) designed to offer simple management services for TCP/IP (Transmission Control Protocol/Internet Protocol) networks. Internet standards groups have also defined the so-called Management Information Base (MIB), which forms a global information model for network management and provides information objects organised in a tree structure. This forms a global information model for network management. The information model is described in FRC 1155: "Structure and Identification for TCP/IP-Based Internets". This model contains information objects that are organised in a tree structure to allow for future extensions. An example of a standard MIB is defined in RFC 1213: "Management Information Base for network Management of TCP/IP-Based Internets: MIB II". Further details on SNMP and MIBs can be also be found in "Data and Computer Communications" (4th Edition) by William Stallings, Maxwell MacMillan International, 1994 ISBN 02-415441-5, pages 701-724.

As shown in Figure 1, the message tracking system 10 comprises two functional components in the form of a message tracking mechanism 20 and a message tracking tool 26. The message tracking mechanism 20 and the message tracking tool 26 could be supplied as an integrated software package, or alternatively the message tracking mechanism 20 could be supplied separately from the message tracking tool 26. Indeed, the message tracking mechanism could be implemented on a separate device from the message tracking tool 26, although in the present example they are implemented on a single device. In a preferred embodiment, the message tracking system including the message tracking tool 26 and the message tracking mechanism 20 is implemented on a conventional computer host, e.g. a workstation, by means of computer software programs. The programs can be supplied on one or more optical or other disks, or other storage medium, or may be supplied via a computer network from a central storage location. Once held within the memory of the host computer, the computer programs control the processor or processors of the host to provide the functions of the present invention. The message tracking mechanism 20 is configured to create and maintain the message track data structure 22 in memory, typically the memory of the host computer on which the message track data structure resides. The message tracking tool 26 interfaces with the message track data structure memory 22, and optionally a graphical database memory 24, which can be maintained on the host computer on which the message tracking tool 26 resides, or elsewhere, and is configured to create and maintain one or more display files 28 for containing graphical message track data for display. The display file(s) can also be held in the storage of the host computer for display on a display device of the host computer or for transmission to a remote computer or device for display.

The message tracking mechanism 20 and/or the message tracking tool 26 can be implemented on a conventional computer workstation, a computer network server, a mainframe host computer, or any other information processing hardware acting as a host. The storage elements 22, 24, 28 can be implemented as part of the main memory of the computer system on which the message tracking mechanism 20 and/or the message tracking tool 26 is/are implemented, whether that be main memory, or back-up memory, or a combination of both. Alternatively, one or more special purpose memory units could be provided.

As mentioned above, in a preferred embodiment, the message tracking system 10 comprising the message tracking mechanism 20 and the message tracking tool 26 is implemented by means of software to be stored in the memory of the host computer and is processed by the processor of the host computer. Alternatively, however, one or more of the functions to be described hereinafter could be performed by means of special purpose hardware.

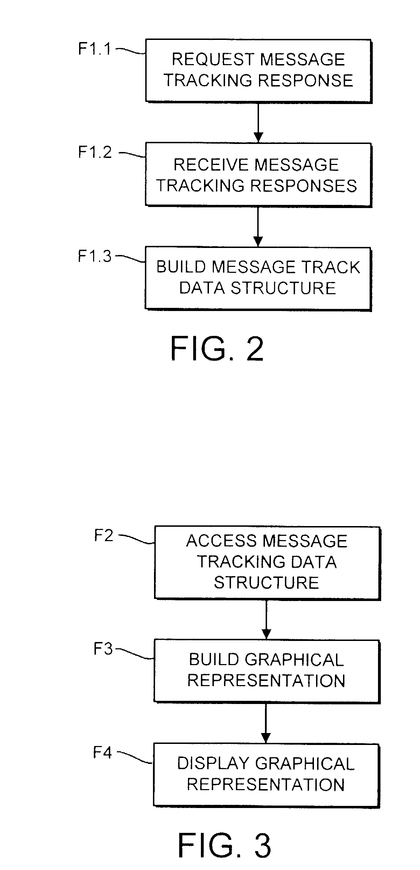

An example of the operation of the message tracking mechanism 20 of Figure 1 will be described by reference to Figures 1 and 2.

Figure 2 is a functional block diagram representing functional components of the message tracking mechanism 20.

The message tracking mechanism 20 builds the message track data structure 22 from responses to message tracking requests. Two examples of approaches for achieving this are described herein. The first approach employs receiving status notifications as a message traverses the network and the second approach employs querying for the status of a message at a later time. Figure 2 is an overview of the mechanisms for both approaches.

Comparing Figure 1 and 2, function F1.1 provides for the transmission of a message tracking request, function F1.2 provides for the reception of message tracking responses (notifications) and function F1.3 provides for the storage of status information in the message track data structure.

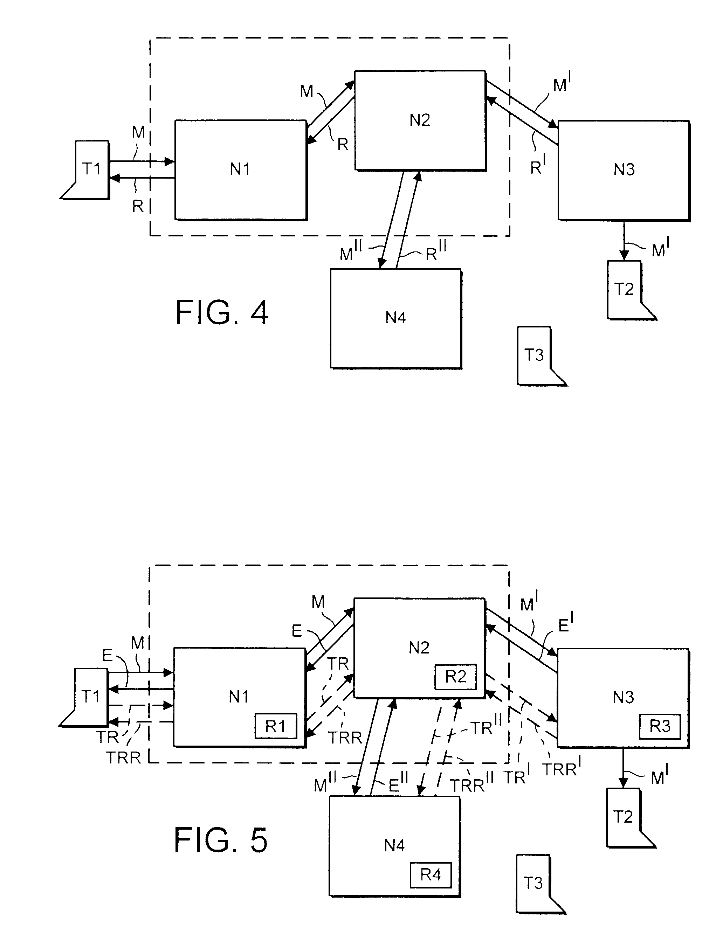

Function F1.1 requests message tracking responses. This function can either be performed at the time of issuing a message in accordance with the first example, or could alternatively be performed at a subsequent time as a separate request to track a message in accordance with the second example. More detail of the function F1.2 for each of the two examples will be given later with reference to Figures 4 and 5. Function F1.2 waits for message track responses and passes responses for handling by function F1.3, which creates and maintains the message track data structure 22 on the basis of the responses.

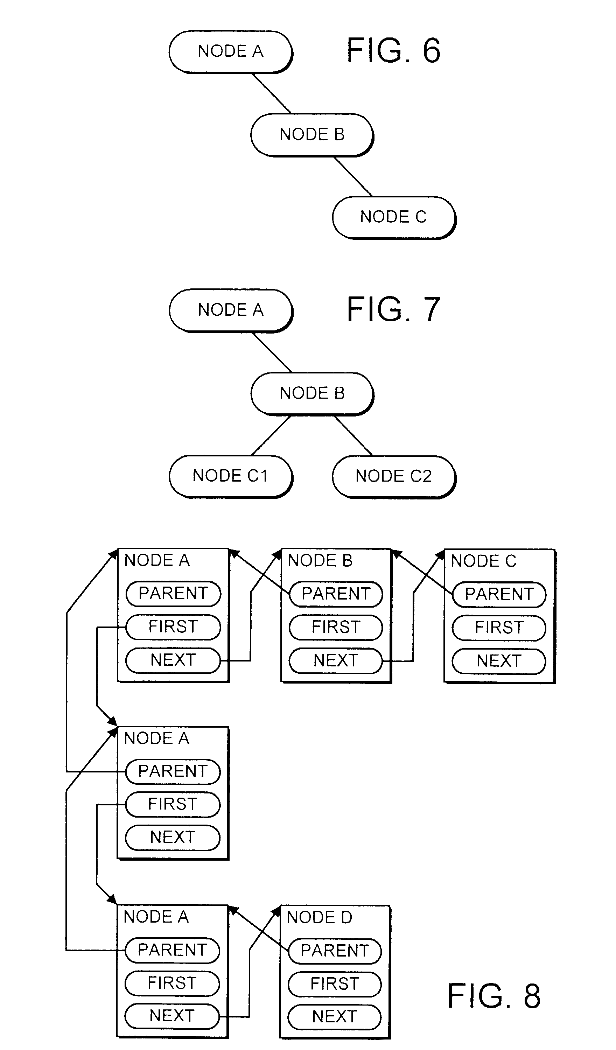

The format in which data is stored in the message track data structure will depend on a desired implementation of the data structure. This could be stored as a linked list with the various entries in the list being linked together by pointers (see for example Figure 8). Preferably, the message track data structure is implemented as an extension to the global MIB referenced above, in a manner which will apparent to one skilled in the art.

Figure 4 illustrates operation of a message tracking mechanism 20 in accordance with a first example. In this arrangement, an initial message M is transmitted from a terminal T1 with intended recipients at T1 and T3. By terminal here is meant merely the end points of the messaging system for the transmission of the messages. The terminals could be computer input terminals in the traditional sense, or could be workstations, other types of computing hardware or user sessions on a multi-user system. The message M is received at a local host N1, from where it is transmitted to a further node N2 which is responsible for distribution of messages to individual recipients. At the node N2, the message is split into two and one message M' is sent to node N3 and another message M" is sent to node N4. At node N3, the message M" is forwarded to the terminal T2. However, at the node N4, due to a break in the transmission link between the node N4 and the terminal T3, the message is not forwarded.

In this first example, each node is programmed to send a response message (notification) to the terminal T1 indicating the fate of the message M, or its derivatives M', M", at that node. The notifications for returning ongoing status information on a message could be based on a straightforward extension of the DSNs detailed in RFCs 1891 to 1894. However, any suitably formatted response messages could be used as long as they contain at least the following information:
- the route of the original message up to responding node; and
- the current disposition of the message at the responding node

As represented in Figure 4, node N1 sends a notification via the response path R to the terminal T1 indicating that the message M is forwarded to node N2. Node N2 sends a notification via the response path R to the terminal T1 indicating that the message M is split into two messages M' and M", and also sends a notification in respect of each of the messages M' and M" indicating that those messages have been forwarded, respectively, to nodes N3 and N4. Node N3 sends a notification via the path R', R to the terminal T1 indicating that the message M' has been delivered to the terminal T2. Node N4 sends a notification via the response path R", R indicating that the message M" could not be delivered because of the failure of the communications link to the terminal T3.

Although reference is made above to the notifications R, R', and R" being returned along the same basic route as the one on which the messages M are transmitted, this need not be the case and the routing of the notifications could be other than via the particular nodes used for the outbound message. The notifications are received by the function F1.2 of the message tracking mechanism and information from the notifications are stored in the data structure 22 by the function F1.3.

Each message is identified by a message specific (possibly unique) identifier. Thus, the original message will include a field containing its identifier, for example a 4 part identifier, for example the concatenation of: host + date + time + a serial number. The derivative messages such as M' and M" typically are arranged to contain a derivative of the original message identifier. The nodes are arranged to include either the original message identifier or a derivative thereof in the responses sent to the message tracking tool.

The generation of the derivative identifiers can be performed using any appropriate algorithm. Preferably, at each node in the outbound path, the original message contains the full track to that point and is then augmented by the status at the node concerned. Accordingly, each notification can include the full history of the outbound message along the specific path to the point from which the response is sent. This can in itself be used to identify correct response messages. Indeed function F1.3 of the message tracking mechanism is preferably arranged to interrogate the history data in the notifications to correctly order the data structure 22. On receiving successive notifications, even if they arrive out of order, the message tracking mechanism is thus able to correctly order the individual message responses and thereby to correctly structure the data structure from those messages.

Function F1.2 thus watches the user's message inbox, and using the identifiers, identifies a notification relating to the original message. When a notification is received, it passes the notification to function F1.3 which examines this notification and adds the information from the notification to the message track data structure for the original message sent.

For each notification received, the function F1.3:
- finds an existing message track data structure or creates a root node for a new, tree-like, message track data structure associated with the message to which the notification relates;
- examines the route of the original message in the notification node by node walking down the message track data structure and:
   - where nodes do not exist in the message track data structure, creates an empty node; and
      at the current end node (the node which sent the DSN), adds or updates the status of the message.

The notification can be discarded after the information is added to the message track data structure.

Figure 5 is an alternative approach for building the message track data structure. It is assumed in Figure 5 that the same basic message is sent from terminal T1 with the intention of being delivered to terminals T2 and T3. As in the example of Figure 4, a derivative message M' is successfully delivered to terminal T2, whereas the derivative message M" is not delivered to terminal T3.

In this approach, a record of all message transmissions via each node is stored at the respective nodes in real-time as the messages are transmitted. Thus, in node N1, a record R1 is made and stored in memory at the node. In node N2, a record R2 is created and stored in memory. Similarly, in nodes N3 and N3, respective records R3 and R4 are made and stored at those nodes.

Conventional memory management techniques can be employed for managing the record stored at the individual nodes, with records being deleted after a predetermined time, as required. For example, it would be possible for different storage times to be provided for different users depending on user requirements.

With this approach, the user of terminal T1 or, if authorised, another user of the system, could request that the message M is tracked. In order to do this, the message tracking manager 20 issues a tracking request TR (including the identifier for the original message M) and a further identifier indicating that this is a tracking request. The tracking request would then follow the same path as the original message M, including being split into derivative tracking requests TR' and TR" at node N2. The tracking request will be interpreted at each node in the system as a request to identify the stored information relating to the original message, and at this time a response message (notification) will be sent to the terminal T1 via the tracking response paths represented by TRR, TRR' and TRR". As for the example of Figure 4, the notifications (responses) need not follow the same path as the message M, although in practice it is likely they will do so.

Thus, in this second approach, an interested party can query the status of an e-mail message at a later time after the message is sent. To discover the ultimate disposition of the message, each message router along the message track of the message must be queried. The message track data structure is then built in a similar way to the first approach.

The message tracking tool 26 can be used to query the user for information used to locate where to start looking for the message in question. This could be, for example, the message ID of the message, to whom it was sent, the subject, the date/time it was sent, and so on.

The message tracking mechanism tool 26 prepares a message tracking request including the message identification information which is sent to the message tracking mechanism 20. This then sends a message tracking request to the message router that the message was originally sent to. This message router is generally known since we knew where to send the original message on its first (and possibly final) hop on its journey.

The message router responds to the request with one or more responses. If the response details more than one message, the user can narrow the search by creating a more specific query (perhaps even by using one of the unique message IDs from a list that was returned).

These top level responses become the top or root node in the message track data structure for one or more messages.

If the response that was returned does not detail the final outcome of the message (because, for instance, the message was passed to another node or nodes for further delivery), the message tracking mechanism can query this node or nodes with further requests. The responses of the further requests become child nodes of this node in the hierarchical message track data structure. The message track data structure will be described in more detail later.

At each node, the disposition (i.e. status) of the message (e.g., forwarded; non-delivered, etc) is found. This information from each node is added to the message track data structure. A track of requests and responses is kept so that it can- be determined which response came from which request. The responses become children of the request in the message track data structure.

As mentioned above, the message tracking request preferably includes the identifier of the original message to be tracked, with the message tracking request including a field with its own identifier, which could be a derivative of the original message identifier. Accordingly, responses to the message tracking request preferably include the identifier of the message tracking request or a derivative thereof.

In order to provide consistency through the information processing network, the various requests and responses are preferably implemented in accordance with standard SNMP procedures, the individual nodes being provided with network management software which was responsive to SNMP requests in order to carry out necessary operations and return responses including the requested data. SNMP management techniques are well-known to those skilled in the art. A message tracking request could, for example, be sent as an SNMP GET operation and the response thereto as an SNMP GET-RESPONSE operation.

Both approaches can use the message track data structure, but in the second approach query requests are matched to query responses. In the first approach the responses include the path from the responding node to identify where the response data goes. The message track data structure effectively contains nodes corresponding to the nodes that the original message transmitted.

For example, where a message was sent to a mary@nodec, then sent from nodea to nodeb and then finally delivered to a user by nodec, the corresponding message track data structure can have the functional structure illustrated in Figure 6.

At each node in the message track data structure, information about the message can be stored. For example, when the message arrived at the node, when it was sent on and where, whether an error occurred, or even how much processing time was involved in handling the message.

If the original message was sent to more than one recipient, the message track data structure contains a separate branch for each node after the message splits. If all the recipients are on the same node, then the message track data structure looks like the Figure 6. If at some point in the message track of the message, one or more of the recipients are on different nodes, a bifurcation in the message track data structure occurs. For example, if a message is sent to joe@nodec2, but the route to nodes nodecl and nodec2 both use nodeb, the message track data structure could have the general form shown in Figure 7.

Another event that can spilt a message track data structure as above is sending a message to a mailing list. For example, if a user sent mail to list@nodeb and nodeb expanded the list to two recipients, joc@nodec1 and mary@nodec2, the message track data structure would also appear as in the Figure 7 except that information within the structure is different. The information will show at nodea that a message was sent to one recipient at nodea and nodeb, but that nodeb expanded the recipient named "list" and delivered two messages, one to nodec1 and the other to nodec2.

The leaves of the data structure are the last known status of the message. This status could be incomplete for a number of reasons:
- In the case of using DSN (Delivery Status Notification) or other non-query like status messages, the node which currently has the message may not have responded yet, or may never respond with the status of the message
- In the case of a query after the message was sent, the node being queried may not support the query mechanism, or no longer has information on the particular message being queried.

In cases such as these, the message track data structure can contain nodes with no information (except perhaps the node name). Information below these empty nodes can be filled in from other information received or queried later.

At each node, there can be one or more status or disposition messages. These status messages tell what happened when the message was at this node. These messages could be:
- message delivered;
- message could not be delivered and the reason;
- recipient was a list and to what the list expanded;
- the message was transferred to another node or nodes;
- the recipient's mail was forwarded to a different recipient;
- the message is currently waiting processing on a node and why;
- the status is not known.

If the original message could not be delivered and it was returned to the originator, it could be a leaf node, or the route back to the original user could be included by continuing the structure.

Other information that can be contained at each node in the message track data structure can be:
- the next node or nodes that the message was sent to (this is the pointer in the tree towards the leaves);
- the previous node in the tree (this is the pointer towards the root);
- time message arrived;
- time(s) message(s) departed node;
- size of the message;
- priority of message;
- an identifier which identifies the individual message;
- the inbound and outbound originator;
- the inbound and outbound recipient(s);
- the subject;
- the type of message;
- any other information about the message.

In a preferred implementation, each node of the message track data structure contains the following information:
- hostname: name of mail router from where the information came;
- error: a string containing an error message if an error occurred contacting the host for information (this is a local error message);
- request: the information that was requested to create the set of nodes below this point in the tree;
- response: the information returned from this node;
- parent: pointer to the parent's message track data structure node;
- first child: pointer to set of children for this node;
- next child: pointer to set of siblings of this node.

It is the parent, first child, and next child pointers that allow this structure to be a tree. The parent always points up the tree to the node which is pointing to the current node. The first child is a pointer to a linked list of nodes down the track of a message. This is the message hopping from node to node. The next child points to a linked list of children which are siblings to this node. This is used in the case of a bifurcation or other splitting. If a message were sent to three recipients each having a separate message track, the links created could be illustrated by the structure shown in Figure 8.

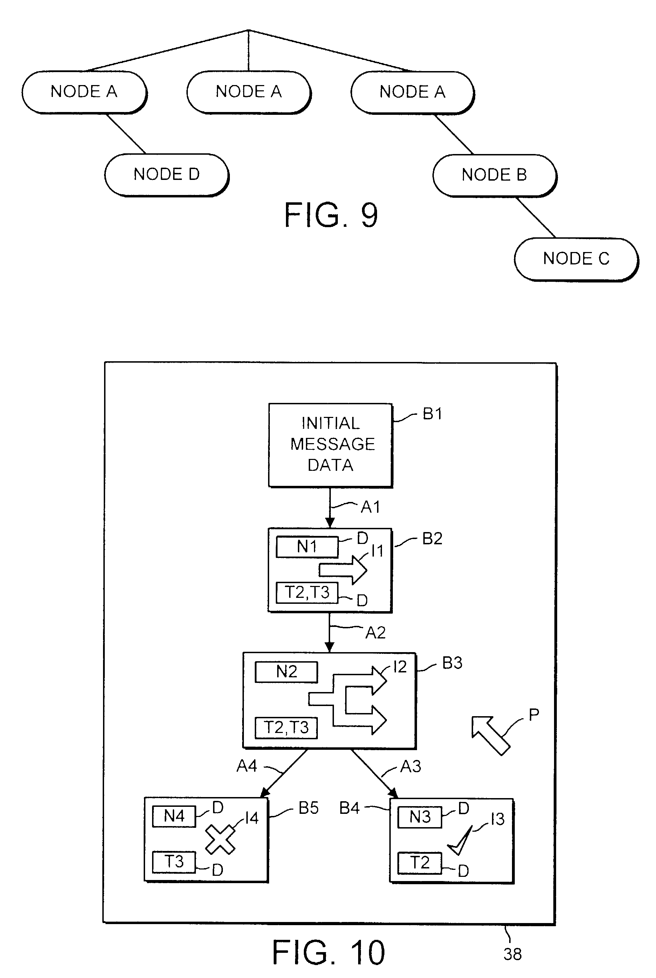

Figure 8 shows the track for a message which had 3 recipients. The three recipients were at three separate nodes, one on nodec, one local on nodea, and the third on noded. In this case, the root node is composed of three siblings since the message split at the beginning. In fact, the root node is really the initial query in our case and it has 3 children which are the 3 root siblings. The structure of Figure 8 could also be represented as in Figure 9.

The request structure part of the message track data structure in a preferred implementation comprises the following fields:
- index: a number to match the request with the response;
- status: used to control the row in the table;
- response status: indicates the status of the query;
- max responses: the largest number of responses to be returned;
- application index: optional value for index into RFC-1565 applTable MIB;
- unique msg ID: a unique message ID used internally by a message router;
- inbound msg ID: a unique message ID as received by the message router;
- outbound msg ID: a unique message ID as transmitted by the message router;
- inbound originator: the originator of the message in its received form;
- outbound originator: the originator of the message in its transmitted form;
- originator name form: the form of the originator in the previous two fields;
- inbound recipient(s): the recipient(s) of the message in its received form;
- outbound recipient(s): the recipient(s) of the message in its transmitted form;
- recipient(s) name form: the form of the recipient(s) in the previous two fields;
- subject: the subject of the message;
- min size: the minimum size of the message to be requested;
- max size: the maximum size of the message to be requested;
- earliest arrival time: the earliest arrival time for the message to be requested;
- latest arrival time: the latest arrival time for the message to be requested;
- disposition: what was done with the message to be tracked;
- failure reason: why a query failed (this is a remote error message);
- type: the type of message to be tracked;
- collapse recipients: requests that only a single recipient for a given message be returned.

It is the request structure that is used to select which message is to be tracked. One or more of the fields can be filled. The fields left blank become wild-cards. The results of the search are returned in the response structure.

The response structure for a preferred implementation comprises the following fields:
- index: matches the index in the request structure above;
- disposition: the disposition (status) of the message;
- disposition time: when the message was disposed of;
- next hop: the name of the message router to which the message was sent;
- previous hop: the name of the message router the message came from;
- non-delivery reason: the reason why the message was not delivered;
- arrival time: the time the message arrived at this message router;
- size: the size of the message;
- priority: the priority of the message;
- unique msg ID: a unique message ID used internally by a message router;
- inbound msg ID: a unique message ID as received by the message router;
- outbound msg ID: a unique message ID as transmitted by the message router;
- inbound originator: the originator of the message in its received form;
- outbound originator: the originator of the message in its transmitted form;
- inbound recipient(s): the recipient(s) of the message in its received form;
- outbound recipient(s): the recipient(s) of the message in its transmitted form;
- supplemental information: supplemental information provided by an node;
- subject: the subject of the message;
- type: the type of message.

These request and response structures are based on an SNMP MIB documented by Lotus Corporation and introduced at the EMA (Electronic Mail Association) meeting for an SNMP MIB to track a message. The MIB was originally published in a paper bound book by the EMA named "Message Management Implementor's Guide: Monitoring and Message Tracking" in May 1995.

The request and the response are kept in each node. The request is useful because it stores the error message if an error occurs during a request. This way the error can be shown when displaying the message track data structure as described below.

A request is made and one or more responses are received. Each response from a node is a sibling and a child of the request. In a preferred implementation, there is a root node which contains the root request and the responses are the children.

Once some or all of the message track data structure is created, it can be displayed. In a preferred embodiment, a rooted tree diagram is formed where the root of the tree is the node which originated the message and the leaf nodes are the nodes from where the last known information has been received. Each node can be represented by a graphical icon so that it becomes easy to see what happened to the message as it traversed the network or what happened to the request. The tree can be collapsed (or pruned) so that complex message track data structures can be viewed in pieces. The tree can also be pruned to display only cases where the message delivery failed or is pending. The message track is preferably displayed in a graphical window, but could also be viewed as a list.

Accordingly, with reference now to Figure 3, when it is desired to display the results of the message tracking procedure, in one embodiment a functional unit F2 accesses data from a graphical database 24 and from the message track data structure 22 for a particular message to be tracked. It will be appreciated that the message track data structure 22 can contain a plurality of individual data structures for a plurality of individual messages. The graphical database 24 includes icons and connecting structures for connecting individual icons for representing operations which can occur at the various nodes in the information processing system and for representing the connections between those nodes or individual operations within a node. As an alternative to using a stored graphical database for icons and other graphical elements, the graphical elements for the graphical display could be generated on the fly.

As the message track data structure includes data representing operations performed at individual nodes, a functional unit F3 is able to build a graphical representation of the message history for a selected message and to generate a display file 28 comprising a graphical representation of the message history concerned. Preferably, the graphical representation is generally in the form of a flow diagram with individual blocks (e.g. block B1, B2, B3, B4 and B5) containing icons representing operations performed at various stages in the messaging history and data D identifying the nodes at which the operations are performed and/or the intended recipient of the particular message or derivative message concerned, and/or other data. The individual blocks B are preferably connected by arrows or other linking devices A1, A2, A3 and A4, for indicating the flow between those blocks.

An example of a graphical representation is shown in Figure 10. As shown in Figure 10, the representation is a substantially two-dimensional tree-like representation, although alternative one-dimensional or three or more-dimensional representations could be used. A two-dimensional representation as in Figure 10 provides a particularly easy to understand representation on a two-dimensional display screen.

Preferably, the individual icons I are intended to represent in an easily understandable manner the operations performed at individual points in the message structure thus, for example, icon I1 indicates that a message has been forwarded. Message I2 indicates that a message has been divided into a plurality of messages. I3 indicates that a message has been successfully delivered. Icon 14 represents that it was not possible to further transmit a message.

The message track data structure preferably includes additional information, including codes or textual information specifying in more detail the nature of the operations for each of the blocks B1-B5. The icons shown are merely illustrative of possible icons. Other different states may wish to be represented, in which case appropriate icons may be chosen. As for the icons represented in Figure 10, the particular iconic representation of the function concerned is a matter of design choice.

It is also possible, using standard graphical user interface techniques to expand and/or contract the graphical representation to facilitate the display of the graphical representation within one display screen on a monitor of a workstation. Thus, for example, using a pointer P on the display screen and a mouse or other user input device, it is possible for the user to identify a particular block, and to request that-the block is expanded by including further parts of the data structure (for example by dividing one block into a plurality of blocks and links indicating in more detail the individual processes at a node) or to give a textual representation in more detail of the operations performed in respect of that block.

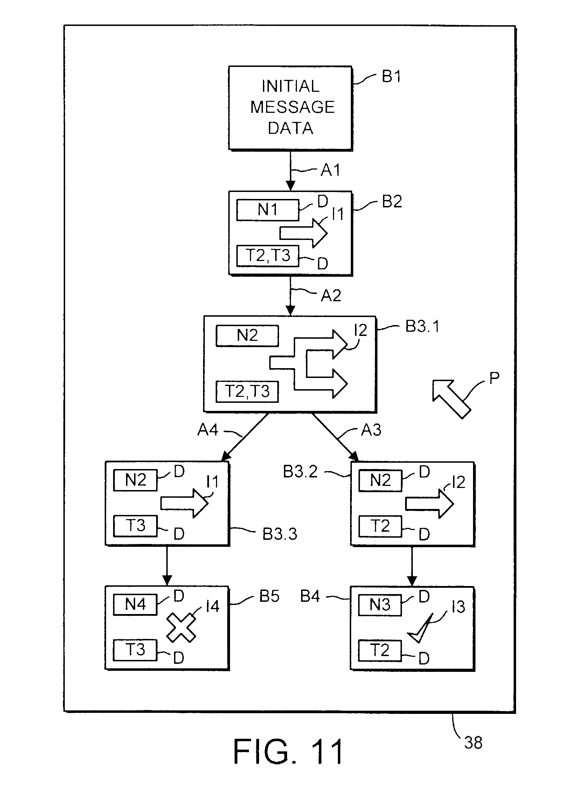

Figure 11 represents the expansion of the block B3 into a block B3.1 which represents the bifurcation of the message concerned, and further blocks B3.2 and B3.3 representing the individual transmission of the derivative messages M' and M" as shown in Figures 4 and 5.

It will be appreciated that a graphical tree can be used to show both the track of a message and the disposition of a message at the same time. The root of the tree can be the submission of the message. It could also be where the track of the message starts, if tracking the message starts part way along the message track. Each node in the tree represents a processing of the message at each stage of message delivery.

A preferred implementation uses X windows. Within X windows there is a toolkit named "The Athena Widgets". Within the Athena Widgets, there is a tree widget. The tree widget is described in Volume 5: X Toolkit Intrinsics Reference Manual from O'Reilly & Associates, Inc. The tree widget allows one to add other widgets to it (in the present case boxes are added). When the tree widget is laid out, the subordinate widgets are structured into a connected tree with lines drawn between them and rooted at one edge of the window.

This is how the tree is laid out:
- create a tree widget;
- create the top node of the tree: looking at the top node of the message track data structure, if there is no previous hop, then create an icon showing that the message was submitted; if there is a previous icon, then show that the message was transferred from a previous node; this is the root node in the graphical appearance;
- for each sibling (the next child linked list) create a subtree (detailed below) connected to the parent just created using the root widget created as the parent argument;
- call XawTreeForceLayout function which lays out the nodes in the graphical buffer.

Creating a subtree is done as follows (the parent widget is passed as an argument):
- if this node has a response, create a node (described below), otherwise create a node with an icon labelled "unknown" to fill in the gap;
- if this is a tail node (no children) which has no response (perhaps an error occurred), show an appropriate icon for this and return;
- for each child of this node:
   call this function recursively to build the rest of the tree.

Each node is created as follows (the parent widget is passed in as an argument):
- create a box; the parentWidget of the box is set to the parent widget;
- within the box, create an icon and two text labels; the icon depends on the disposition of the message; the first text label is the name of the node; the second text label are the name(s) of the recipient(s);
- when each box is added to the tree, attach a callback to add a menu to it for expanding or contracting the branch of the tree or to get more detailed information (by double-clicking on the box).

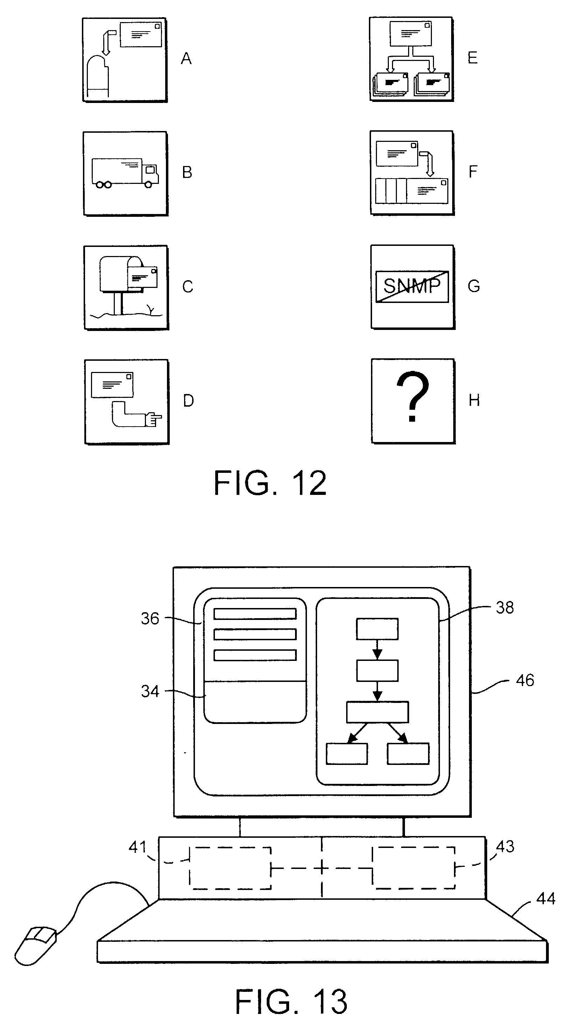

As mentioned above, the question of the form of icons is a question of design choice. In one example, the icons may be as represented schematically in Figure 12, where:
- icon 12A represents a 'submitted' disposition in the form of a letter being dropped in a mail box;
- icon 12B represents a 'transferred' disposition in the form of a truck transferring a letter to another location;
- icon 12C represents a 'delivered' disposition in the form of a picture of a letter in a mailbox;
- icon 12D represents a 'redirected' disposition in the form of a hand redirecting, or forwarding a letter;
- icon 12E represents a 'distribution list expansion' disposition in the form of one letter being split;
- icon 12F represents a 'queued' disposition in the form of a letter waiting in a queue;
- icon 12G represents a 'leaving SNMP' (i.e., leaving SNMP management territory) disposition for the end of a track of a message;
- icon 12H represents an 'unknown' disposition for where information is not available.

As each box (with its icon and text labels) is added to the tree, their parent is set. When XawTreeForceLayout is called, the tree is actually drawn and laid out in the window. The tree can be larger than the window. The window that contains the tree is scrollable.

The detailed information is the information in the response structure. This information is too voluminous to fit into either the graph or the list, so it becomes necessary to provide a means of getting the information. This is displayed in a form with each field duly labelled. It is brought up by double-clicking on the box in the tree.

With this implementation of the tree, the tree can be anchored to any side of the window. In the preferred implementation, the top was chosen.

For the alternative list representation, the following information is provided in each line of a list representation of the message track:
- recipient(s): the first few recipients of the message;
- disposition: the disposition of the message;
- arrival time: time message arrived at the message router;
- error: any error that occurred.

If more information is available (there are more nodes below the entry), the list is highlighted in such a way to show that the user can select/double-click on the entry to "drill down" and get information from the next level in the tree.

One unfortunate restriction of a list such as this is that the user needs to drill down to discover the disposition for each message, in essence doing a manual depth first search.

Another possibility of displaying the information in a list is to display the information only on the leaf nodes. Where as this may be most useful in detailing what actually happened to the message at a glance without having to dig down for each message, it may not be obvious how things actually transpired. It is useful in this case to be able to "undrill" or look up the tree towards root to see the whole story of the message. This can be accomplished by using a variety of techniques in window systems: double-clicking over and over until the root is reached, presenting the user with a list when he or she presses a mouse button, or using another window to show the history.

The message history could also be shown as a "folding tree". This is sort of a mix between a graphical tree and a list. Each item in a folding tree can be collapsed to hide the complexity beneath it, but each item is a line of text or a very small simple icon or both as in the file manager in windows 3.1.

Figure 13 is a schematic representation of a workstation within which the message tracking mechanism and the message tracking tool may be implemented as part of a network communications application. The network communications application can be stored in memory 43 of the workstation 40 and be performed using the processor 41 of the workstation 40. As shown in Figure 13, the workstation includes a system unit 42, user input devices 44 and 45, a display 46 and other devices, not shown, including communications adaptors, back-up storage, and so on. In Figure 13, the graphical representation 38 of Figure 10 is represented in one window of the display. In another window 36, a list of messages which have been tracked is shown. Associated with each of the entries in the list 36 is a message track data structure which is stored in the message track data memory 22.

A block 34 is used to give a textual description of a block identified on the graphical representation 38 using, for example, a pointer P under the control of the mouse 45.

Thus there has been described an embodiment of a method and apparatus to enable the track of a message over an information network, for example the Internet, to be presented to a user in a readily understandable and manipulable manner. In the embodiment a message track data structure including data from the track of a message is built. This can then be used with a graphical database for graphical elements to generate a graphical representation of the message track for display to the user. As an alternative, graphical elements could be created on the fly. In building the message track data structure, entries are created for nodes in the message track, the entries including data defining the message status at the nodes. Graphical representations of nodes and of connecting elements for connecting nodes, and iconic representations of message status at the nodes can be accessed in the graphical data base for generating the graphical representation of the message track, or the graphical representations can be created on the fly. Textual information can be added to the graphical representations of the nodes. The message tracking can be performed at the same time as message transmission or alternatively at a later time in response to a message tracking request.

Although particular embodiments of the invention have been described, it will be appreciated that the invention is not limited thereto, and many modifications and/or additions may be made within the scope of the invention. For example, different combinations of the features of the dependent Claims other than those specifically enumerated may be combined with the features of the independent Claims in particular embodiments of the invention.

## Claims

1. A method of tracking a message sent over an information network, the method comprising steps of:
a) building a message track data structure including status data from nodes in a track of a message;
b) generating a graphical representation of said message track from said message track status data, said graphical representation including graphical elements representative of said status data at said nodes, wherein said graphical elements are mutually arranged to represent said message track.

2. A method according to Claim 1, wherein step (b) comprises a step of: responding to said status data to access a palette of iconic representations of message status at said nodes for generating said graphical elements.

3. A method according to Claim 1, wherein step (b) comprises: responding to said status data to generate graphical elements on the fly for representing said message status at said nodes.

4. A method according to any preceding Claim, wherein the step (b) comprises: generating a hierarchy of graphical elements, with each graphical element graphically representing message status at a said node.

5. A method according to Claim 4, wherein said graphical elements of said hierarchy are linked as a rooted tree.

6. A method according to Claim 4, wherein said graphical elements of said hierarchy are linked as a graph.

7. A method according to any preceding Claim, wherein step (b) includes a step of adding text to said graphical elements.

8. A method according to Claim 7, wherein said text identifies one or more of the following:
- the identity of a node in said message track;
- the identity of a message;
- the disposition of a message at a said node.

9. A method according to any preceding Claim, further comprising:
c) in response to user selection of part of said graphical representation, expanding said selected part by generating further graphical elements detailing one or more one or more lower level nodes in said message track.

10. A method according to any one of Claims 1 to 8, further comprising:
c) in response to user selection of part of said graphical representation, adding text describing message status at a part of said graphical representation.

11. A method according to any one of Claims 1 to 8, further comprising:
c) in response to user selection of at least a part of said graphical representation, replacing said part by text describing message status at said selected part.

12. A method according to any one of Claims 1 to 8, further comprising:
c) in response to user selection of part of said graphical representation including a plurality of nodes, compressing said selected part by generating a graphical element representative of a higher level node including said plurality of nodes.

13. A method according to any preceding Claim, further comprising displaying said graphical representation on a display device.

14. A method according to any preceding Claim, wherein said information network is the Internet.

15. A message tracking system comprising a message tracking tool configured to be operable to access a message track data structure including status data from nodes in a track of a message for generating a graphical representation of said message track from said message track status data, said graphical representation including graphical elements representative of said status data at said nodes, wherein said graphical elements are mutually arranged to represent said message track.

16. A system according to Claim 15, comprising a message tracking mechanism configured to be operable to build said message track data structure.

17. A system according to Claim 16, wherein said message tracking mechanism is configured to be operable, following transmission of a message, to respond to responses sent from nodes in said message track, and indicating said message status at said nodes, to create corresponding entries in said message track data structure.

18. A system according to Claim 17, wherein said message tracking mechanism is configured to be operable to identify a message identifier corresponding to or derived from a message identifier for said transmitted message to identify said responses.

19. A system according to Claim 16, wherein said message tracking mechanism is configured to be operable, at a user selected time subsequent to the transmission of a message, to transmit a message tracking request and subsequently to respond to responses to said message tracking request sent from nodes in said message track and indicating said message status at said nodes, to create corresponding entries in said message track data structure.

20. A system according to Claim 19, wherein said message tracking mechanism is configured to be operable to identify a message identifier corresponding to or derived from a message identifier for said transmitted request to identify said responses.

21. A system according to any one of Claims 1.5 to 20, further comprising a palette of iconic representations of message status, said message tracking tool being configured to be responsive to said status data to access said palette of iconic representations of message status at said nodes for generating said graphical elements.

22. A system according to any one of Claims 15 to 20, wherein said message tracking tool is configured to be responsive to said status data to generate graphical elements on the fly to represent said message status at said nodes.

23. A system according to any one of Claims 15 to 20, wherein said message tracking tool is configured to be responsive to said status data to generate a hierarchy of graphical elements, with each graphical element graphically representing message status at a said node.

24. A system according to Claim 23, wherein said graphical elements of said hierarchy are linked as a rooted tree.

25. A system according to Claim 23, wherein said graphical elements of said hierarchy are linked as a graph.

26. A system according to any one of Claims 15 to 25, wherein said message tracking tool is configured to be operable to add text to said graphical elements.

27. A system according to Claim 26, wherein said text identifies one or more of the following:
- the identity of a node in said message track;
- the identity of a message;
- the disposition of a message at a said node.

28. A system according to any one of Claims 15 to 27, wherein said message tracking tool is configured to be operable, in response to user selection of part of said graphical representation, to expand said selected part by generating further graphical elements detailing one or more lower level nodes in said message track.

29. A system according to any one of Claims 15 to 27, wherein said message tracking tool is configured to be operable, in response to user selection of part of said graphical representation, to add text describing message status at a part of said graphical representation.

30. A system according to any one of Claims 15 to 27, wherein said message tracking tool is configured to be operable, in response to user selection of at least a part of said graphical representation, to replace said part by text describing message status at said selected part.

31. A system according to any one of Claims 15 to 27, wherein said message tracking tool is configured to be operable, in response to user selection of part of said graphical representation including a plurality of nodes, to compress said selected part by generating a graphical element representative of a higher level node including said plurality of nodes.

32. A system according to any one of Claims 15 to 31, wherein said message tracking tool is configured to be operable to display said graphical representation on a display device.

33. A system according to any one of Claims 15 to 32, in the form of a computer software system.

34. A system according to any one of Claims 15 to 33, wherein the information network is the Internet.

35. A message tracking program on a data storage medium, said program comprising a message tracking tool configured to be operable to access a message track data structure including status data from a plurality of nodes in a track of a message for generating a graphical representation of said message track from said message track status data, said graphical representation including a plurality of graphical elements representative of said status data at said nodes, wherein said graphical elements are mutually arranged to represent said message track.

36. A computer comprising a message tracking tool program operable to access a message track data structure including status data from a plurality of nodes in a track of a message for generating a graphical representation of said message track from said message track status data, said graphical representation including a plurality of graphical elements representative of said status data at said nodes, wherein said graphical elements are mutually arranged to represent said message track.

37. A computer according to Claim 36, comprising a display for displaying said graphical representation.

38. A computer according to Claim 37, comprising a message tracking program configured to be operable to build said message track data structure.
